(19) Europäisches Patentamt
European Patent Office
Office européen des brevets

(11) **EP 3 553 766 A1**

(12) **EUROPÄISCHE PATENTANMELDUNG**

(43) Veröffentlichungstag:
16.10.2019 Patentblatt 2019/42

(51) Int Cl.:
***G09B 11/00*** *(2006.01)*

(21) Anmeldenummer: 18166308.9

(22) Anmeldetag: **09.04.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Neff, Hartmut**
**6330 Cham (CH)**

(72) Erfinder: **Neff, Hartmut**
**6330 Cham (CH)**

(74) Vertreter: **EGLI-EUROPEAN PATENT**
**ATTORNEYS**
**Horneggstrasse 4**
**Postfach**
**8034 Zürich (CH)**

(54) **VERFAHREN ZUM AUFBAUEN EINES MOSAIKS**

(57) Ein computerbasiertes Verfahren dient der Bereitstellung von Anordnungsbefehlen zum Aufbauen eines Mosaiks (1) eines nachzubildenden Originalbilds (10, 11), wobei das Mosaik aus einem vorab festgelegten Satz von Mosaikbausteinen (3, 34, 3', 3'', 3''') aufzubauen ist, wobei der Satz von Mosaikbausteinen eine Anzahl n von Mosaikbausteinen mit einer Anzahl (a) unterschiedlicher Farben ($c_1$-$c_a$) umfasst. Das Verfahren zur Bereitstellung von Anordnungsbefehlen weist folgende Schritte auf: Unterteilen des Originalbilds (10, 11) in eine Anzahl m von Gitterelementen (12), wobei die Anzahl m der Gitterelemente (12) der Anzahl n der Mosaikbausteine (3, 34, 3', 3'', 3''') entspricht, Zuordnen je eines Farbkennwerts ($f_l$) zu jedem der m Gitterelemente (12), Gruppieren der Farbkennwerte ($f_l$) in einer Anzahl g von Gruppen, wobei die Anzahl g der Gruppen der Anzahl a von Farben ($c_1$-$c_a$) entspricht, so dass für jede Gruppe die Anzahl der Gitterelemente (12) in der Gruppe der Anzahl der Mosaikbausteine einer Farbe ($c_1$-$c_a$) entspricht und Zuordnen jeder der a Farben ($c_1$-$c_a$) der Mosaikbausteine (3, 34, 3', 3'', 3''') zu der entsprechenden Gruppe von Gitterelementen (12).

Fig. 3b

EP 3 553 766 A1

**Beschreibung**

Die vorliegende Erfindung bezieht sich auf ein Verfahren zum Aufbauen eines Mosaiks aus einem vorab festgelegten Satz von Mosaikbausteinen und auf ein computerbasiertes Verfahren zur Bereitstellung von Anordnungsbefehlen zum derartigen Aufbauen eines Mosaiks.

Ein Mosaik wird in der Regel aus Mosaikbausteinen aufgebaut, die verschiedene Farben aufweisen und auf einer Unterlage angeordnet werden. Als Vorlage kann hierzu ein Bild (Originalbild) dienen, welches durch das Mosaik nachgebildet wird.

Ein derartiges Verfahren zum Aufbauen eines Mosaiks ist beispielsweise aus der Druckschrift US 2013/0189650 A1 bekannt. Hierzu ist ein Bastelset aus verschiedenfarbigen Perlen und einer Unterlage zum Anordnen der Perlen bereitgestellt. Der Nutzer lädt das nachzubildende Bild auf eine Webseite im Internet hoch und ein geeignetes Computerprogramm erstellt daraus eine Anordnungsvorlage für die Perlen auf der Unterlage, wobei für jedes Pixel des nachzubildenden Bildes eine Perle mit möglichst ähnlicher Farbe gewählt wird. Um die Ähnlichkeit des Mosaiks mit dem Originalbild weiter zu erhöhen, kann vorab ein Perlensatz ausgewählt werden, dessen Farben an die des Originalbildes angepasst sind bzw. möglichst gut mit den Farben des Originalbildes übereinstimmen.

Es ist eine Aufgabe der vorliegenden Erfindung, ein alternatives bzw. ein verbessertes Verfahren zum Aufbauen eines Mosaiks bzw. ein alternatives bzw. verbessertes computerbasiertes Verfahren zur Bereitstellung von Anordnungsbefehlen zum Aufbauen eines Mosaiks bereitzustellen, insbesondere ein Verfahren, mit dem es möglich ist, aus einem vorab festgelegten, d.h. vorgegebenen Satz von Mosaikbausteinen beliebige Mosaikbilder zu erstellen und/oder beliebig oft neue Mosaikbilder zu erstellen.

Diese Aufgabe wird gelöst durch ein computerbasiertes Verfahren zur Bereitstellung von Anordnungsbefehlen zum Aufbauen eines Mosaiks eines nachzubildenden Originalbilds gemäß Anspruch 1 und ein Verfahren zum Aufbauen eines Mosaiks eines nachzubildenden Originalbilds gemäß Anspruch 9. Dabei können die Verfahren auch durch die untenstehenden bzw. in den Unteransprüchen angeführten Merkmale des jeweils anderen Verfahrens weitergebildet sein.

Ein erfindungsgemäßes computerbasiertes Verfahren dient der Bereitstellung von Anordnungsbefehlen zum Aufbauen eines Mosaiks eines nachzubildenden Originalbilds, wobei das Mosaik aus einem vorab festgelegten Satz von Mosaikbausteinen aufzubauen ist und wobei der Satz von Mosaikbausteinen eine Anzahl n von Mosaikbausteinen mit einer Anzahl a unterschiedlicher Farben umfasst. Das Verfahren zur Bereitstellung von Anordnungsbefehlen weist folgende Schritte auf: Unterteilen des Originalbilds in eine Anzahl m von Gitterelementen, wobei die Anzahl m der Gitterelemente der Anzahl n der Mosaikbausteine entspricht, Zuordnen je eines Farbkennwerts zu jedem der m Gitterelemente, Gruppieren der Farbkennwerte in einer Anzahl g von Gruppen, wobei die Anzahl g der Gruppen der Anzahl a von Farben der Mosaikbausteine entspricht, so dass für jede Gruppe die Anzahl der Gitterelemente in der Gruppe der Anzahl der Mosaikbausteine einer Farbe entspricht und Zuordnen jeder der a Farben der Mosaikbausteine zu der entsprechenden Gruppe von Gitterelementen.

Der Begriff "Mosaik" bzw. "Mosaikbild" bezeichnet ein aus einzelnen kleinen Teilen, im Folgenden als Mosaikbausteine bezeichnet, zusammengesetztes Bild. Dabei weisen alle Mosaikbausteine vorzugsweise dieselbe geometrische Form auf, beispielsweise sind sie als Quader, Würfel, dünne Plättchen, Kugeln oder Halbkugeln ausgebildet, und jedem Mosaikbaustein ist genau eine Farbe zugeordnet. Weiter sind die Mosaikbausteine so ausgebildet, dass im Wesentlichen lediglich eine Fläche mit der ihnen jeweils zugeordneten Farbe sichtbar ist wenn die Mosaikbausteine nebeneinander und vorzugsweise lückenlos auf einer Unterlage angeordnet sind. Die Mosaikbausteine sind somit Volumenelemente, aus denen das fertige Mosaik zusammengesetzt ist.

Das Originalbild liegt als ein Bild in digitaler Form vor, so dass es in dem oben beschriebenen Verfahren durch ein geeignetes Computerprogramm bearbeitet bzw. verarbeitet werden kann. Das digitale Originalbild besteht aus einer rasterförmigen Anordnung von Bildpunkten (auch als Pixel bezeichnet), denen jeweils eine Farbe zugeordnet ist. Die Gitterelemente, in die das Originalbild in dem oben beschriebenen Verfahren unterteilt wird, müssen nicht die Bildpunkte des Originalbildes sein. Vielmehr umfasst jedes Gitterelement in der Regel eine Vielzahl von Bildpunkten des Originalbildes. Alle Gitterelemente haben ebenfalls dieselbe geometrische Form und stellen eine zweidimensionale und vorzugsweise lückenlose Unterteilung des Originalbildes in Flächenelemente dar.

Das Zuordnen je eines Farbkennwerts zu je einem Gitterelement erfolgt vorzugsweise basierend auf den in den Gitterelementen enthaltenen Farben des Originalbildes, insbesondere basierend auf den Farben der in dem jeweiligen Gitterelement enthaltenen Pixeln.

Mit dem erfindungsgemäßen computerbasierten Verfahren zum Bereitstellen von Anordnungsbefehlen zum Aufbauen eines Mosaiks ist es beispielsweise möglich, aus einem vorgegebenen Satz von Mosaikbausteinen und unter Verwendung aller Mosaikbausteine des Satzes auf einfache Art und Weise ein Originalbild nachzubilden. Dabei erfolgt die Zuordnung der farbigen Mosaikbausteine zu den Gitterelementen nicht bzw. nicht ausschließlich unter dem Gesichtspunkt, eine möglichst große farbliche Ähnlichkeit zu dem Originalbild zu erzielen. Vielmehr erfolgt die Farbzuordnung unter Zugrundelegen der Farbverteilung der Mosaikbausteine. Damit ist es beispielsweise möglich, ein kontrastreiches Mosaikbild zu erzielen, insbesondere auch dann, wenn das Originalbild besonders hell oder dunkel oder kontrastarm ist.

Vorzugsweise umfasst das computerbasierte Verfahren zum Bereitstellen von Anordnungsbefehlen zum Aufbauen eines Mosaiks weiter einen Schritt des Ausgebens von akustischen und/oder graphischen Informationen zur Anordnung der Mosaikbausteine auf einer Unterlage entsprechend den den Gitterelementen zugeordneten Farben. Damit wird es dem Benutzer beispielsweise ermöglicht, ein Mosaik auf einfache Art und Weise aus den Mosaikbausteinen aufzubauen.

Vorzugsweise umfasst ein Farbkennwert eines Gitterelements einen Durchschnittswert aller Farbwerte der in dem Gitterelement enthaltenen Pixel (Bildpunkte). Damit kann beispielsweise ein Farbkennwert auf einfache Art und Weise berechnet werden.

Vorzugsweise umfasst ein Farbkennwert eines Gitterelements weiter eine Zufallszahl, die zu einem Farbwert addiert wird.

Durch das Addieren einer Zufallszahl wird erzielt, dass sich alle Farbkennwerte der Gitterelemente voneinander unterscheiden, d.h es wird eine komplette Ordnung der Farbkennwerte hergestellt. Damit wird beispielsweise erzielt, dass die Gruppierung der Gitterelemente eindeutig durchführbar ist.

Vorzugsweise ist ein Farbkennwert ein Graustufenwert und/oder die Farben der Mosaikbausteine sind Graustufen. Durch die Verwendung von Graustufen als Farben für das Mosaik kann das Verfahren beispielsweise vielseitig und für verschiedene Originalbilder verwendet werden, da der optische Eindruck des aus dem Originalbild erzeugten Mosaiks nicht auf den Originalfarben des Originalbildes, sondern auf der Farbverteilung, die durch den Satz von Mosaikbausteinen vorgegeben ist, basiert.

Vorzugsweise ist ein Farbkennwert ein numerischer Wert und das Gruppieren der Farbkennwerte erfolgt vorzugsweise in Abhängigkeit der den Farbkennwerten entsprechenden numerischen Werte. Dadurch ist es beispielsweise möglich, die Gruppierung der Gitterelemente zu vereinfachen.

Vorzugsweise ist die Anzahl der Mosaikbausteine pro Farbe für alle Farben gleich, d.h. die Farben der Mosaikbausteine folgen einer Gleichverteilung. Durch eine derartige Gleichverteilung ist es beispielsweise möglich, das optische Erscheinungsbild des Mosaiks zu verbessern und einen Algorithmus zum Gruppieren der Farbkennwerte bzw. der Gitterelemente zu vereinfachen.

Vorzugsweise ist das Originalbild ein Portrait. Portraits sind in der Regel kontrastreiche Bilder mit wenigen unterschiedlichen Farbtönen, weshalb bei der Verwendung eines Portraits als Originalbild unter Verwendung des oben beschriebenen Verfahrens beispielsweise ein optisch besonders ansprechendes Mosaik erstellt werden kann.

Ein erfindungsgemäßes Verfahren dient zum Aufbauen eines Mosaiks eines nachzubildenden Originalbilds, wobei das Mosaik aus einem vorab festgelegten Satz von Mosaikbausteinen aufgebaut wird und der Satz von Mosaikbausteinen eine Anzahl n von Mosaikbausteinen mit einer Anzahl a unterschiedlicher Farben umfasst. In dem Verfahren werden die Mosaikbausteine gemäß Anordnungsbefehlen angeordnet, wobei die Anordnungsbefehle gemäß einem oben beschriebenen computerbasierten Verfahren zum Bereitstellen von Anordnungsbefehlen zum Aufbauen eines Mosaiks bereitgestellt werden. Damit ist es beispielsweise möglich, die oben in Bezug auf das Verfahren zum Bereitstellen von Anordnungsbefehlen beschriebenen Wirkungen auch in einem Verfahren zum Aufbauen eines Mosaiks zu erzielen.

Vorzugsweise werden die Mosaikbausteine mittels einer vorzugsweise lösbaren Befestigung auf einer Unterlage befestigt. Durch das lösbare Befestigen der Mosaikbausteine ist es beispielsweise möglich, aus dem vorab festgelegten Satz von Mosaikbausteinen beliebig oft neue Mosaikbilder zu erstellen. Hierzu weisen die Mosaikbausteine vorzugsweise jeweils eine Unterseite und eine Oberseite auf, wobei sie mit ihrer Unterseite auf der Unterlage befestigbar sind. Die Oberseite weist dabei die dem jeweiligen Mosaikbaustein zugeordnete Farbe auf, so dass bei auf der Unterlage befestigten Mosaikbausteinen lediglich eine farbige Fläche (d.h. die Oberseite) sichtbar ist. Die lösbare Befestigung kann dabei beispielsweise als eine Steckverbindung oder als eine andere, beispielsweise form- oder kraftschlüssige Verbindung ausgebildet sein. Vorzugsweise ist die lösbare Befestigung als eine Magnetverbindung ausgebildet, d.h. die Mosaikbausteine werden magnetisch auf der Unterlage befestigt.

Vorzugsweise umfasst die Unterlage Zeilen und/oder Spalten zum Anordnen der Mosaiksteine. Damit kann beispielsweise das Anordnen der Mosaikbausteine auf der Unterlage vereinfacht werden, da die Anordnungsplätze bzw. Positionen der Mosaikbausteine durch die Zeilen bzw. Spalten vorgegeben sind.

Vorzugsweise umfassen die Mosaikbausteine eine der jeweiligen Farbe entsprechende Kennzeichnung, weiter bevorzugt eine der jeweiligen Farbe zugeordnete Zahl. Durch eine derartige Kennzeichnung kann beispielsweise das Anordnen der Mosaikbausteine auf der Unterlage weiter vereinfacht werden.

Vorzugsweise werden alle n Mosaikbausteine zum Aufbauen des Mosaiks verwendet. Da das Originalbild erfindungsgemäß in eine Anzahl m von Gitterelementen unterteilt wird, die der Anzahl n der Mosaikbausteine entspricht, kann durch Anordnen aller Mosaikbausteine das Mosaik vervollständigt werden.

Weitere Merkmale und Zweckmäßigkeiten der Erfindung ergeben sich aus der Beschreibung eines Ausführungsbeispiels anhand der beigefügten Zeichnungen.

Fig. 1a    ist eine schematische perspektivische Ansicht eines ersten Ausführungsbeispiels eines Mosaikbausteins für die Verwendung in einem erfindungsgemäßen Verfahren zum Aufbauen eines Mosaiks und Fig. 1b ist eine schematische perspektivische Ansicht eines zweiten Ausführungsbeispiels eines derartigen Mosaikbausteins,

Fig. 2    ist eine schematische Draufsicht eines Ausführungsbeispiels eines erst teilweise fertiggestellten Mosaiks, das durch ein erfindungsgemäßes Verfahren aufbaubar ist,

Fig. 3a    ist eine schematische Draufsicht auf ein Beispiel eines Originalbildes zur Verwendung in einem erfindungsgemäßen Verfahren und Fig. 3b ist ein Ausschnitt des in Fig. 3a gezeigten Originalbilds,

Fig. 4    ist ein schematisches Blockdiagramm, welches schematisch ein Verfahren zum Aufbauen eines Mosaiks eines nachzubildenden Originalbilds zeigt und

Fig. 5    ist ein schematisches Blockdiagramm, welches schematisch ein computerbasiertes Verfahren zur Bereitstellung von Anordnungsbefehlen zum Aufbauen eines Mosaiks eines nachzubildenden Originalbilds zeigt.

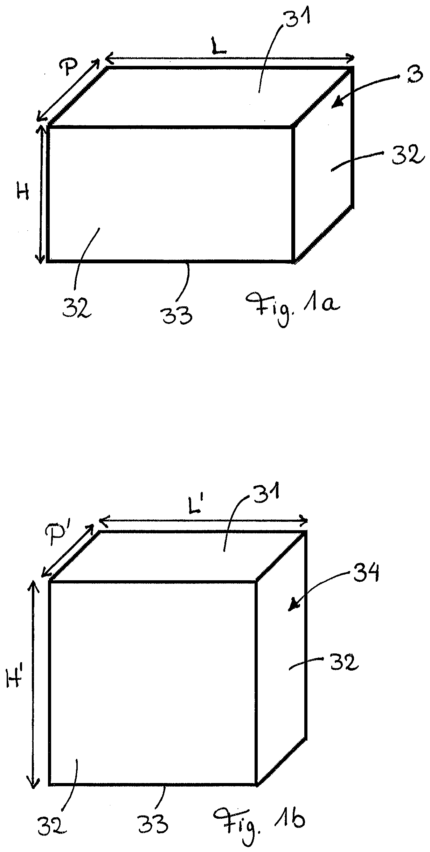

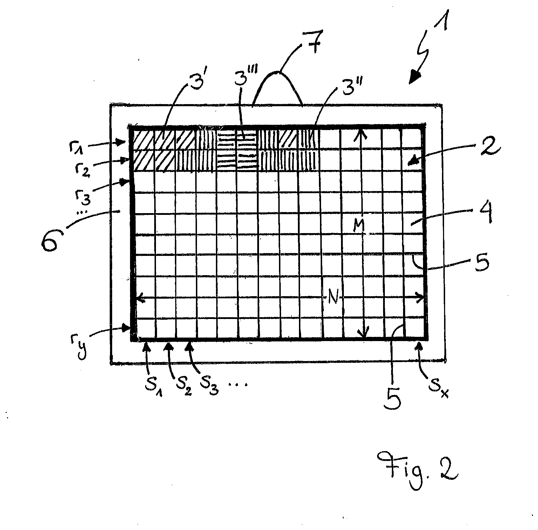

Im Folgenden wird mit Bezug auf Fig. 1a, Fig. 1b und Fig. 2 ein Mosaik beschrieben, das durch ein erfindungsgemäßes Verfahren aufbaubar ist. Das in Fig. 2 gezeigte Mosaik 1 umfasst eine Unterlage 2, optional einen die Unterlage 2 umrahmenden Rahmen 6 und optional eine Aufhängung 7 zum Befestigen des fertiggestellten Mosaiks beispielsweise an einer Wand. Die optionale Aufhängung 7 ist in Fig. 2 an einer Oberseite des Rahmens 6 angebracht, sie kann jedoch auch an einer anderen Stelle, z.B. einer Rückseite, der Unterlage 2 oder des Rahmens 6 angebracht sein.
Die Unterlage 2 ist im vorliegenden Ausführungsbeispiel rechteckig ausgebildet mit einer Länge N und einer Breite M. Durch eine Unterteilung 5 ist die Unterlage 2 in eine Anzahl von y Zeilen $r_1$ bis $r_y$ und in eine Anzahl von x Spalten $s_1$ bis $s_x$ und somit in eine Anzahl von n Anordnungsplätzen 4 unterteilt, wobei gilt: n = x·y. Die Zeilen $r_1$ bis $r_y$ erstrecken sich dabei jeweils über die Länge N der Unterlage 2 und die Spalten $s_1$ bis $s_x$ erstrecken sich jeweils über die Breite M der Unterlage 2. Die Unterteilung 5 kann dabei eine optische Unterteilung sein, z.B. aufgemalte Linien, und/oder sie kann eine strukturelle Unterteilung sein, z.B. Trennwände zwischen den Anordnungsplätzen 4.
Weiter umfasst das Mosaik 1 einen Satz einer vorab festgelegten Anzahl n von Mosaikbausteinen entsprechend der Anzahl n der Anordnungsplätz 4. Die Mosaikbausteine haben alle dieselbe geometrische Form und sind als dreidimensionale Körper ausgebildet und dazu geeignet, auf den n Anordnungsplätzen 4 der Unterlage 2 angeordnet zu werden. Beispielsweise können die Mosaikbausteine wie in Fig. 1a gezeigt als Quader 3 ausgebildet sein, wobei der Quader 3 eine Oberseite 31, eine Unterseite 33 und vier Seitenflächen 32 umfasst und sich entlang einer Breite P, einer Länge L und einer Höhe H erstreckt. Die Oberseite 31 und die Unterseite 33 sind somit als Rechtecke mit einer Länge L und einer Breite P ausgebildet. Vorzugsweise sind die Länge L und die Breite P so gewählt, dass sie im Wesentlichen den jeweiligen Erstreckungen der Anordnungsplätze 4 der Unterlage 2 entsprechen, d.h. für die Länge L gilt im Wesentlichen: L = N/x, wobei N die Länge der Unterlage 2 ist und x die Anzahl der Spalten, und für die Breite P gilt im Wesentlichen: P = M/y, wobei M die Breite der Unterlage 2 ist und y die Anzahl der Spalten. Dadurch überdecken die Oberseiten 31 der Mosaikbausteine 3 die Unterlage 2 lückenlos und nicht überlappend wenn alle n Mosaikbausteine 3 auf den n Anordnungsplätzen 4 angeordnet sind. Vorzugsweise sind die Oberseite 31 und die Unterseite 33 der Mosaikbausteine 3 und somit auch die Anordnungsplätze 4 quadratisch ausgebildet, d.h. die Länge L ist gleich groß wie die Breite P.
Fig. 1b zeigt ein zweites Ausführungsbeispiel eines Mosaikbausteins, welcher als Würfel 34 mit quadratischer Oberseite 31, quadratischer Unterseite 33 und quadratischen Seitenflächen 32 ausgebildet ist, d.h. bei dem sowohl die Länge L' als auch die Breite P' als auch die Höhe H' gleich groß sind. Auch hier sind die Kanten des Würfels (d.h. die Länge L' bzw. Breite P') so gewählt, dass sie den jeweiligen Erstreckungen der in diesem Fall quadratischen Anordnungsplätzen 4 der Unterlage 2 entsprechen.
Die Mosaikbausteine 3, 34 und die Unterlage 2 sind derart ausgebildet, dass die Mosaikbausteine 3, 34 mittels einer lösbaren Befestigung auf den Anordnungsplätzen 4 befestigbar sind. Beispielsweise umfasst zumindest die Unterseite 33 der Mosaikbausteine 3 ein magnetisches Material und die Unterlage 2 umfasst eine Metallplatte, so dass die Mosaikbausteine 3, 34 magnetisch auf der Unterlage 2 befestigbar sind. Alternativ oder zusätzlich können die Mosaikbausteine 3, 34 auch mittels einer lösbaren Steck- oder Klebeverbindung auf der Unterlage 2 befestigbar sein.
Die durch die Unterteilung 5 gebildeten Anordnungsplätze 4 dienen der leichteren Anordbarkeit der Mosaikbausteine auf der Unterlage 2, es ist jedoch auch möglich, die Mosaikbausteine auf einer Unterlage ohne Anordnungsplätze 4 bzw. ohne Unterteilung 5 anzuordnen.
Die Mosaikbausteine 3, 34 des Satzes von Mosaikbausteinen haben, wie oben beschrieben, alle dieselbe geometrische Form. Sie unterscheiden sich teilweise in ihrer Farbe, insbesondere in der Farbe ihrer Oberseite 31. Der Satz von Mosaikbausteinen weist insgesamt eine Anzahl a unterschiedlicher Farben $c_1$ bis $c_a$ auf, wobei der Satz von einer i-ten Farbe $c_i$ ($1 \leq i \leq a$) eine Anzahl $b_i$ von Mosaikbausteinen umfasst, so dass gilt: $\sum_{i=1}^{a} b_i = n$, wobei n die Gesamtzahl der Mosaikbausteine 3, 34 ist. Vorzugsweise ist die Anzahl $b_i$ der Mosaikbausteine 3, 34 pro Farbe konstant, d.h. $b_i = b = n/a$ für alle i, wobei n die Gesamtzahl der Mosaikbausteine in dem Satz von Mosaikbausteinen ist und a die Anzahl der Farben, d.h. die Farben der Mosaikbausteine folgen einer Gleichverteilung. Die verschiedenen Farben der Mosaiksteine sind vorzugsweise verschiedene Graustufen, wobei schwarz und weiß ebenfalls als Graustufen auftreten können.

In Fig. 2 sind Mosaikbausteine 3' einer ersten Farbe bzw. einer ersten Graustufe $c_1$ gezeigt, welche durch Schrägstriche dargestellt sind, Mosaikbausteine 3" einer zweiten Farbe bzw. einer zweiten Graustufe $c_2$ (dargestellt durch senkrechte Striche) und Mosaikbausteine 3''' einer dritten Farbe bzw. einer dritten Graustufe $c_3$ (dargestellt durch waagrechte Striche). Bei dem in Fig. 2 gezeigten Beispiel sind die insgesamt achtzehn Mosaikbausteine 3', 3", 3''' auf den Anordnungsplätzen 4 der ersten zwei Zeilen und ersten neun Spalten der Unterlage 2 angeordnet, die restlichen Anordnungsplätze 4 des Mosaiks 1 sind in Fig. 2 noch nicht besetzt.

Weiter umfassen die Mosaikbausteine 3, 34 optional eine Kennzeichnung entsprechend ihrer jeweiligen Farbe bzw. Graustufe $c_1$ bis $c_a$. Die Kennzeichnung kann beispielsweise an der Unterseite 33 und/oder einer Seitenfläche 32 der Mosaikbausteine 3, 34 vorgesehen sein. Beispielsweise kann die Kennzeichnung eine Zahl umfassen, die die jeweilige Farbe bzw. Graustufe des Mosaikbausteins repräsentiert, vorzugsweise eine farbige Zahl. Durch farbige Zahlen sind die Mosaikbausteine beispielsweise leichter sortierbar.

Beispielsweise kann ein Satz von 1200 Mosaikbausteinen mit zehn unterschiedlichen Graustufen $c_1$ bis $c_{10}$ bereitgestellt sein, wobei jeweils 120 Mosaikbausteine derselben Graustufe vorhanden sind. Die Unterlage 2 weist ebenfalls 1200 Anordnungsplätze auf, sie kann beispielsweise in 30 Zeilen und 40 Spalten unterteilt sein. Die hier genannten Werte verstehen sich lediglich als beispielhafte Werte, die Anzahl der Mosaikbausteine bzw. Anordnungsplätze, sowie die Anzahl der Farben bzw. Graustufen und die Anzahl der Mosaikbausteine pro Farbe bzw. Graustufe können beliebig davon abweichen.

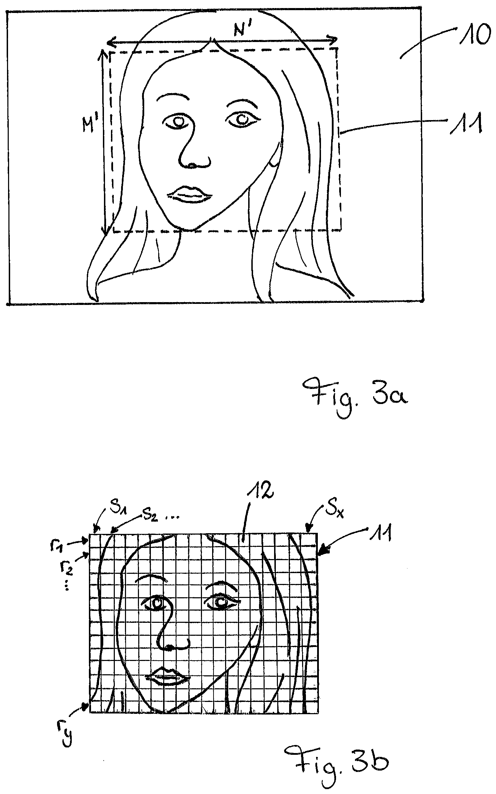

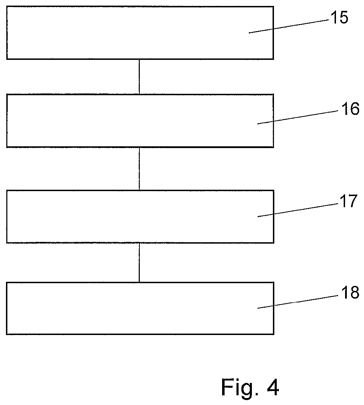

Im Folgenden wird mit Bezug auf Fig. 4 ein Verfahren zum Aufbauen des Mosaiks 2 beschrieben. In Schritt 15 wird ein oben beschriebener Satz von Mosaikbausteinen 3, 31, 3', 3", 3''' bereitgestellt, sowie zumindest die oben beschriebene Unterlage 2. Anschließend wählt der Nutzer in Schritt 16 ein Originalbild 10, beispielsweise ein Portrait, aus. Ein Beispiel für ein Originalbild 10 ist in Fig. 3a gezeigt. Das Originalbild 10 liegt als Digitalbild vor, beispielsweise kann es auf einem Speichermedium wie einem USB-Stick, einer CD, einer Speicherkarte, in einer Cloud oder in einem internen Speicher eines Computers gespeichert sein.

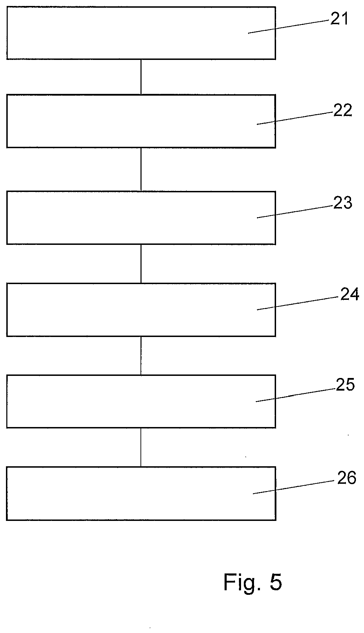

Dann werden in Schritt 17 mittels einer geeigneten Software in Abhängigkeit des digitalen Bildes 10 Anordnungsbefehle zum Aufbauen des Mosaiks 1 erzeugt. Hierzu wird das Originalbild 10 für die Software bereitgestellt, beispielsweise durch Hochladen auf eine Webseite oder in eine App. Das Erzeugen der Anordnungsbefehle wird weiter unten in Bezug auf Fig. 3a, 3b und Fig. 5 näher beschrieben. Die Anordnungsbefehle werden als akustische und/oder optische Befehle bereitgestellt und in Schritt 18 ordnet der Nutzer die Mosaikbausteinen 3, 31, 3', 3", 3''' auf der Unterlage 2 bzw. an den Anordnungsplätzen 4 der Unterlage 2 entsprechend der ausgegebenen Anordnungsbefehle an und befestigt diese auf der Unterlage und baut somit das Mosaik 1 auf. Als Anordnungsbefehl kann beispielsweise die der jeweiligen Farbe bzw. Graustufe entsprechende Kennzeichnung, beispielsweise eine Zahl, zeilenweise oder spaltenweise vorgelesen werden (d.h. akustisch ausgegeben) oder die entsprechenden Kennzeichnungen werden graphisch, beispielsweise auf einem Computerbildschirm oder einem Display eines Smartphones, dargestellt. Das Mosaik 1 ist fertiggestellt, wenn alle n Mosaikbausteine des bereitgestellten Satzes auf der Unterlage 2 angeordnet sind.

Im Folgenden wird mit Bezug auf Fig. 5 ein Verfahren zur Bereitstellung der Anordnungsbefehle zum Aufbauen des Mosaiks 1 beschrieben. Zuerst wird in Schritt 21 das digitale Originalbild 10, welches in Fig. 3a beispielhaft als Portrait gezeigt ist, zugeschnitten und in Gitterelemente 12 aufgeteilt. Das Originalbild umfasst eine Vielzahl von Pixeln, denen jeweils eine Farbe zugeordnet ist. Aus dem Originalbild 10 wird durch die Software und/oder den Nutzer ein rechteckiger Ausschnitt 11 mit einer Länge N' und einer Breite M' ausgewählt, wobei der Ausschnitt 11 so gewählt wird, dass das Seitenverhältnis N'/M' dem Seitenverhältnis N/M der Unterlage 2 entspricht. Der Ausschnitt 11 kann auch das gesamte Originalbild 10 sein.

Dann wird der Ausschnitt 11 wie in Fig. 3b gezeigt in eine Anzahl m von Gitterelementen 12 unterteilt, wobei die Anzahl m der Gitterelemente 12 der Anzahl n der Mosaikbausteine des bereitgestellten Satzes entspricht. Die Gitterelemente 12 entstehen durch eine Rasterung des Ausschnitts 11 und bedecken den Ausschnitt 11 flächig in einer Anzahl von y Zeilen $r_1$ bis $r_y$ und einer Anzahl von x Spalten $s_1$ bis $s_x$ entsprechend der Unterteilung der Unterlage 2 in Anordnungsplätze 4.

Alle Gitterelemente 12 haben dieselbe geometrische Form und stellen eine zweidimensionale und lückenlose Unterteilung des Ausschnitts 11 in Flächenelemente dar. In der Regel umfasst jedes Gitterelement 12 eine Vielzahl von Pixeln des Ausschnitts 11. In dem oben beschriebenen Beispiel wird der Ausschnitt 11 in 1200 Gitterelemente unterteilt, die in 30 Zeilen und 40 Spalten in dem Ausschnitt 11 angeordnet sind. Anschließend wird in Schritt 22 jedem Gitterelement 12 ein Farbwert zugeordnet. Hierzu wird ein Durschnittsfarbwert aller in dem Gitterelement 12 enthaltenen Pixel berechnet und dieser dann in einen Graustufenwert umgerechnet. Es können auch erst die Graustufenwerte der in einem Gitterelement 12 enthaltenen Pixel berechnet werden und daraus dann für jedes Gitterelement 12 der Durchschnittswert der darin enthaltenen Graustufenwerte errechnet werden. Der so erhaltene Durchschnittsgraustufenwert aller Pixel in einem Gitterelement 12 dient als Farbwert für das entsprechende Gitterelement 12.

Beispielsweise kann die Farbe jedes Pixels des Originalbilds 10 bzw. des Ausschnitts 11 durch den jeweiligen Rotanteil R, den Grünanteil G und den Blauanteil B codiert sein. Aus dem Rotanteil R, dem Grünanteil G und dem Blauanteil B wird ein Graustufenwert GSW beispielsweise mit der folgenden Formel berechnet:

$$GSW = (0,2126 \cdot R + 0,7152 \cdot G + 0,0722 \cdot B)$$

Somit ist jeder Farbwert (Durchschnittsgraustufenwert) ein numerischer Wert.

Dann wird jedem Gitterelement 12 des Ausschnitts 11 ein Farbkennwert $f_l$ ($1 \leq l \leq n$) zugeordnet (Schritt 23 in Fig. 5), wobei der Farbkennwert $f_l$ eine Zufallszahl umfasst, die zu dem in Schritt 22 berechneten Farbwert des jeweiligen Gitterelements 12 addiert wird. Die Farbkennwerte $f_l$ der Gitterelemente 12 sind somit ebenfalls numerische Werte. Durch das Addieren einer Zufallszahl wird erzielt, dass sich alle Farbkennwerte der Gitterelemente 12 voneinander unterscheiden, d.h. dass keine zwei Farbekennwerte gleich sind. Die Farbkennwerte $f_l$ werden nun in Verbindung mit der Position des entsprechenden Gitterelements 12 zwischengespeichert, beispielsweise als Zahlentripel ($f_l$, k, j), wobei k die Spalte des Gitterelements 12 bezeichnet ($1 \leq k \leq x$) und j die Zeile des Gitterelements 12 ($1 \leq j \leq x$).

Die so erhaltenen Zahlentripel ($f_l$, k, j) werden in Schritt 24 in eine Anzahl von g Gruppen gruppiert, wobei die Anzahl g der Gruppen der Anzahl a von Farben bzw. Graustufen $c_1$ bis $c_a$ der Mosaikbausteine des bereitgestellten Satzes entspricht. Das Gruppieren der Zahlentripel ($f_l$, k, j) erfolgt dabei so, dass für jede Gruppe die Anzahl der Zahlentripel in der Gruppe der Anzahl der Mosaikbausteine einer Farbe bzw. Graustufe entspricht.

Hierzu werden beispielsweise die Zahlentripel ($f_l$, k, j) nach den Farbkennwerten $f_l$ in aufsteigender Reihenfolge sortiert. Anschließend werden Grenzwerte bestimmt, die die Zahlentripel in eine Anzahl von a Gruppen einteilt. Wie oben beschrieben umfasst der bereitgestellte Satz von Mosaikbausteinen eine Anzahl $b_i$ von Mosaikbausteinen der i-ten Farbe bzw. Graustufe $c_i$ ($1 \leq i \leq a$). Erfindungsgemäß werden die Zahlentripel ($f_l$, k, j) so gruppiert, dass in einer i-ten Gruppe genau $b_i$ Zahlentripel enthalten sind, also genauso viele, wie Mosaikbausteine der i-ten $c_i$ Farbe vorhanden sind. Im Falle der Gleichverteilung der Farben bzw. Graustufen der Mosaikbausteine ($b_i = b = n/a$ für alle i, s.o.) umfassen alle Gruppen von Zahlentripeln dieselbe Anzahl b an Zahlentripeln.

Anschließend wird in Schritt 25 jede der a Farben bzw. Graustufen $c_1$ bis $c_a$ der Mosaikbausteine der entsprechenden Gruppe von Gitterelementen bzw. Zahlentripeln zugeordnet. Diese Zuordnung ersetzt also in der i-ten Gruppe von Zahlentrippeln alle Farbkennwerte $f_l$ durch die entsprechende Graustufe $c_i$ der Mosaikbausteine, d.h. ($f_l$, k, j) → ($c_i$, k, j), wobei ($1 \leq l \leq n$) und ($1 \leq i \leq a$). Die so erhaltenen Zahlentripel ($c_i$, k, j) ordnen also jedem Gitterelement 12 des Ausschnitts 11 eine Graustufe $c_i$ der Mosaikbausteine zu.

Im abschließenden Schritt 26 werden akustische und/oder graphische Informationen zur Anordnung der Mosaikbausteine 3, 34, 3', 3'', 3''' auf den Anordnungsplätzen 4 der Unterlage 2 ausgegeben, entsprechend den den Gitterelementen 12 zugeordneten Farben bzw. Graustufen $c_1$ bis $c_a$. Hierzu können die den jeweiligen Gitterelementen 12 zugeordneten Graustufen $c_i$ der entsprechenden Zahlentripel ($c_i$, k, j) ausgegeben werden. Alternativ kann auch jeweils die der jeweiligen Graustufe $c_i$ entsprechende auf den Mosaikbausteinen vorgesehene Kennzeichnung ausgegeben werden.

In dem oben beschriebenen Ausführungsbeispiel sind die Mosaikbausteine 3, 34 lösbar auf der Unterlage 2 befestigbar. Es ist jedoch auch möglich, die Mosaikbausteine mittels einer nicht lösbaren Befestigung auf der Unterlage 2 zu befestigen, beispielsweise können die Mosaikbausteine aufgeklebt werden. Auch können die Mosaikbausteine von der oben beschriebenen Quader- bzw. Würfelform abweichen. Beispielsweise können sie jeweils als Prisma mit beliebiger Grundfläche, als Kugeln oder Halbkugeln ausgebildet sein. Dabei ist es nicht notwendig, dass die Unterlage 2 durch die darauf angeordneten Mosaikbausteine lückenlos überdeckt wird.

Die Farben der Mosaikbausteine sind nicht auf Graustufen beschränkt. Vielmehr ist das oben beschriebene Verfahren auf beliebige Farben anwendbar. Auch müssen die Farbwerte der Gitterelemente 12 nicht Durchschnittsgraustufenwerte sein, sie können auch andere (Durchschnitts-) Werte sein oder beispielsweise auch Zahlentripel, die jeweils den (Durchschnitts-) Rotwert, Grünwert und Blauwert umfassen.

Die Unterlage 2, auf der die Mosaikbausteine zum Aufbauen des Mosaiks angeordnet und befestigt werden, ist nicht auf die beschriebene rechteckige Form beschränkt. Vielmehr kann sie jede beliebige, mit geeigneten Mosaikbausteinen bedeckbare Form aufweisen. In diesem Fall ist der Ausschnitt 11 des Originalbildes 10 ebenfalls nicht rechteckig, sondern an die Form der Unterlage angepasst.

**Patentansprüche**

1. Computerbasiertes Verfahren zur Bereitstellung von Anordnungsbefehlen zum Aufbauen eines Mosaiks (1) eines nachzubildenden Originalbilds (10, 11), wobei

   das Mosaik aus einem vorab festgelegten Satz von Mosaikbausteinen (3, 34, 3', 3", 3''') aufzubauen ist, wobei der Satz von Mosaikbausteinen eine Anzahl n von Mosaikbausteinen mit einer Anzahl (a) unterschiedlicher Farben $(c_1-c_a)$ umfasst,
   wobei das Verfahren zur Bereitstellung von Anordnungsbefehlen folgende Schritte aufweist:

   Unterteilen des Originalbilds (10, 11) in eine Anzahl m von Gitterelementen (12), wobei die Anzahl m der Gitterelemente (12) der Anzahl n der Mosaikbausteine (3, 34, 3', 3", 3''') entspricht,
   Zuordnen je eines Farbkennwerts $(f_l)$ zu jedem der m Gitterelemente (12),
   Gruppieren der Farbkennwerte $(f_l)$ in einer Anzahl g von Gruppen, wobei die Anzahl g der Gruppen der Anzahl a von Farben $(c_1-c_a)$ entspricht, so dass für jede Gruppe die Anzahl der Gitterelemente (12) in der Gruppe der Anzahl der Mosaikbausteine einer Farbe $(c_1-c_a)$ entspricht und
   Zuordnen jeder der a Farben $(c_1-c_a)$ der Mosaikbausteine (3, 34, 3', 3", 3''') zu der entsprechenden Gruppe von Gitterelementen (12).

2. Verfahren nach Anspruch 1, weiter umfassend einen Schritt (26) des Ausgebens von akustischen und/oder graphischen Informationen zur Anordnung der Mosaikbausteine (3, 34, 3', 3", 3''') auf einer Unterlage (2) entsprechend den den Gitterelementen (12) zugeordneten Farben $(c_1-c_a)$.

3. Verfahren nach Anspruch 1 oder 2, wobei ein Farbkennwert $(f_l)$ eines Gitterelements (12) einen Durchschnittswert aller Farbwerte der in dem Gitterelement enthaltenen Pixel umfasst.

4. Verfahren nach einem der Ansprüche 1 bis 3, wobei ein Farbkennwert $(f_l)$ eines Gitterelements (12) eine Zufallszahl umfasst, die zu einem Farbwert addiert wird.

5. Verfahren nach einem der Ansprüche 1 bis 4, wobei ein Farbkennwert $(f_l)$ ein Graustufenwert ist und/oder wobei die Farben der Mosaikbausteine Graustufen sind.

6. Verfahren nach einem der Ansprüche 1 bis 5, wobei ein Farbkennwert $(f_l)$ ein numerischer Wert ist und wobei das Gruppieren der Farbkennwerte $(f_l)$ vorzugsweise in Abhängigkeit der den Farbkennwerten entsprechenden numerischen Werten erfolgt.

7. Verfahren nach einem der Ansprüche 1 bis 6, wobei die Anzahl b der Mosaikbausteine pro Farbe für alle Farben $(c_1-c_a)$ gleich ist.

8. Verfahren nach einem der Ansprüche 1 bis 7, wobei das Originalbild (10, 11) ein Portrait ist.

9. Verfahren zum Aufbauen eines Mosaiks (1) eines nachzubildenden Originalbilds (10, 11), wobei das Mosaik (1) aus einem vorab festgelegten Satz von Mosaikbausteinen (3, 34, 3', 3", 3''') aufgebaut wird, wobei der Satz von Mosaikbausteinen eine Anzahl n von Mosaikbausteinen (3, 34, 3', 3", 3''') mit einer Anzahl a unterschiedlicher Farben $(c_1-c_a)$ umfasst, und
   wobei die Mosaikbausteine (3, 34, 3', 3", 3''') gemäß Anordnungsbefehlen angeordnet werden, wobei die Anordnungsbefehle gemäß einem Verfahren nach einem der Ansprüche 1 bis 8 bereitgestellt werden.

10. Verfahren nach Anspruch 9, wobei die Mosaikbausteine (3, 34, 3', 3", 3''') mittels einer vorzugsweise lösbaren Befestigung auf einer Unterlage (2) befestigt werden.

11. Verfahren nach Anspruch 10, wobei die Mosaikbausteine (3, 34, 3', 3", 3''') magnetisch auf der Unterlage (2) befestigt werden.

12. Verfahren nach einem der Ansprüche 9 bis 11, wobei die Unterlage Zeilen $(r_1- r_y)$ und/oder Spalten $(s_1-s_x)$ zum Anordnen der Mosaiksteine (3, 34, 3', 3", 3''') umfasst.

13. Verfahren nach einem der Ansprüche 9 bis 12, wobei die Mosaikbausteine (3, 34, 3', 3", 3''') eine der jeweiligen Farbe $(c_1-c_a)$ entsprechende Kennzeichnung umfassen, vorzugsweise eine der jeweiligen Farbe $(c_1-c_a)$ zugeordnete

Zahl.

14. Verfahren nach einem der Ansprüche 9 bis 13, wobei alle n Mosaikbausteine (3, 34, 3', 3'', 3''') zum Aufbauen des Mosaiks (1) verwendet werden.

Fig. 1a

Fig. 1b

Fig. 2

Fig. 3a

Fig. 3b

Fig. 4

Fig. 5

**Europäisches Patentamt**
**European Patent Office**
**Office européen des brevets**

# EUROPÄISCHER RECHERCHENBERICHT

Nummer der Anmeldung

EP 18 16 6308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/189650 A1 (LEE WAI C [US] ET AL) 25. Juli 2013 (2013-07-25) | 1,2,6-9, 12,14 | INV. G09B11/00 |
| Y | * Zusammenfassung; Abbildungen 1, 2a, 7, 8b-e * <br> * Absätze [0009] - [0012], [0015], [0016] * <br> * Absätze [0032] - [0043] * <br> * Absätze [0045] - [0046], [0049], [0050], [0053] * <br> * Absätze [0057], [0063], [0069] - [0076], [0082] * | 3-5,10, 11,13 | |
| Y | DE 601 23 914 T2 (SEIKO EPSON CORP [JP]) 15. März 2007 (2007-03-15) <br> * Absätze [0007], [0053]; Abbildungen 8, 9 * | 3-5 | |
| Y | US 6 720 971 B1 (YAMAMOTO KUNIHIRO [JP] ET AL) 13. April 2004 (2004-04-13) <br> * Zusammenfassung; Abbildungen 1-6 * <br> * Spalte 6, Zeile 1 - Spalte 7, Zeile 65 * <br> * Spalte 9, Zeile 30 - Spalte 12, Zeile 67 * | 3-5 | |
| Y | DE 690 14 425 T2 (CROSFIELD ELECTRONICS LTD [GB]) 20. April 1995 (1995-04-20) <br> * Seiten 6-10 * <br> * Seiten 12-15 * | 3-5 | RECHERCHIERTE SACHGEBIETE (IPC) <br> G09B |
| Y | US 5 158 295 A (SHILLING ROBERT A [US]) 27. Oktober 1992 (1992-10-27) <br> * das ganze Dokument * | 10,11 | |
| Y | DE 20 2014 007751 U1 (MATTHÄUS HAHN E K [DE]) 10. November 2014 (2014-11-10) <br> * Zusammenfassung; Anspruch 8; Abbildungen 2-4 * <br> * Absätze [0039] - [0044] * | 10,11,13 | |

Der vorliegende Recherchenbericht wurde für alle Patentansprüche erstellt

| Recherchenort | Abschlußdatum der Recherche | Prüfer |
|---|---|---|
| München | 5. Dezember 2018 | Mülthaler, Evelyn |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 16 6308

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2018

| Im Recherchenbericht angeführtes Patentdokument | Datum der Veröffentlichung | Mitglied(er) der Patentfamilie | Datum der Veröffentlichung |
|---|---|---|---|
| US 2013189650 A1 | 25-07-2013 | KEINE | |
| DE 60123914 T2 | 15-03-2007 | AT 343184 T<br>CN 1379584 A<br>DE 60123914 T2<br>EP 1223745 A2<br>HK 1050980 A1<br>KR 20020057825 A | 15-11-2006<br>13-11-2002<br>15-03-2007<br>17-07-2002<br>21-07-2006<br>12-07-2002 |
| US 6720971 B1 | 13-04-2004 | EP 0961232 A2<br>US 6720971 B1 | 01-12-1999<br>13-04-2004 |
| DE 69014425 T2 | 20-04-1995 | DE 69014425 D1<br>DE 69014425 T2<br>EP 0403226 A1<br>JP H03114365 A<br>US 5121223 A | 12-01-1995<br>20-04-1995<br>19-12-1990<br>15-05-1991<br>09-06-1992 |
| US 5158295 A | 27-10-1992 | KEINE | |
| DE 202014007751 U1 | 10-11-2014 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130189650 A1